# EUROPEAN PATENT SPECIFICATION

(11) **EP 3 199 982 B1**
(45) Date of publication and mention of the grant of the patent: **09.10.2019**
(21) Application number: 17152937.3
(22) Date of filing: 24.01.2017
(51) Int. Cl.: G01W 1/12

(54) **REMOTE SYSTEM FOR CLIMATE SENSORIZATION, MONITORING, COMMUNICATION AND ARCHIVING IN REAL TIME, OF SOLAR RADIATIONS**
FERNGESTEUERTES SYSTEM FÜR KLIMA-ABFÜHLUNG, ÜBERWACHUNG, KOMMUNIKATION UND ARCHIVIERUNG IN ECHTZEIT VON SONNENEINSTRAHLUNGEN
SYSTÈME DE TÉLÉDÉTECTION CLIMATIQUE, DE SURVEILLANCE, DE COMMUNICATION ET D' ARCHIVAGE, EN TEMPS RÉEL, DE RAYONNEMENTS SOLAIRES

(30) Priority: 01.02.2016 PT 2016109124
(43) Date of publication of application: 02.08.2017
(73) Proprietor: Brightfloats, Lda., 2780-179 Oeiras (PT)
(72) Inventor: MACHADO MONTEIRO, VASCO, 2780-179 OEIRAS (PT)
(74) Representative: Pereira da Cruz, Joao

(56) References cited:
- FR-A1- 2 950 963
- JP-A- 2013 238 550
- US-A1- 2015 177 415
- SCOTT KUSZAMAUL ET AL: "Lanai High-Density Irradiance Sensor Network for characterizing solar resource variability of MW-scale PV system", 35TH IEEE PHOTOVOLTAIC SPECIALISTS CONFERENCE (PVSC), 20-25 JUNE 2010, HONOLULU, HI, USA, IEEE, PISCATAWAY, NJ, USA, 20 June 2010 (2010-06-20), pages 283-288, XP031785381, ISBN: 978-1-4244-5890-5

## Description

### Technical field of the invention

There is a direct, exact and instantaneous cause-effect relationship between the increase of the UV-B solar incidence and the decrease of the thickening or fragmentation of the "ozone layer" (filtering and geostationary). These variations are permanent and above of territorial surfaces of various dimensions and are the direct consequence of the release and concentration of the so-called greenhouse gases associated to the global warming, with serious consequences on climate change.

Currently, and although there is some (few) surface sensorization, the sensors installed in satellites generate data which are processed through algorithmic analysis software and define the estimated values that compose a virtual and global map of the UV-B radiation incidence on the terrestrial surface. However, satellite sensorization combined with other atmospheric data generates estimates with considerable associated error, both in instantaneous values and in measurements and forecasts for small geographic areas. The reduced sensitivity of the sensorization through satellites originates large dimension atmospheric and territorial cells (hundreds of thousands of km²), with a capacity limited to only detect large discontinuities or variations of the thickening of said ozone layer, whose continuous and permanent small morphological variations generate considerable UV-B incidences (among others) in small geographical regions. For now, this is the information of the UV-B incidence available to the Portuguese Institute of the Sea and the Atmosphere (IPMA - *Instituto Português do Mar e da Atmosfera*) and to the European counterparts (source: Eurosun), that is, only for large territorial areas, and therefore small territorial areas such as beaches, cities and urban areas, which are of such interest to this end, cannot be monitored for this purpose, as it could greatly improve the habitability and occupation quality of these regions of the territory, since the UV rays incidence can greatly affect human life.

These were the facts that motivated the development of the present invention, a dedicated, organized and territorial system for sensorization, real-time monitoring, communications and archiving of solar radiations values, data of solar incidence at the ground level, starting in the range of UV-B spectrum, but possibly extensible to other sunlight frequencies, in a surface network and detailed regional coverage.

**Document** US2015/177415A1 is considered to be the closest prior art of the invention, it discloses a process, apparatus and software program for organizing ground-based irradiance and meteorological hardware measurement devices, satellite weather data, weather forecasting software, solar energy production data and solar energy production simulation software, that enables the forecasting and monitoring of solar irradiance and solar power production in an area of interest.

### Brief description of the invention

The present invention is defined as a square mesh system of climate sensorization, real-time communications/ information and archiving of solar radiation incidence data, starting in the UV-B spectrum at the ground level but not restricted to this radiation, through the generation of small square cells obtained from the projection of a virtual square grid on the GIS (Geographic Information System) platform of the territory, oriented according to the N-S and E-W directions. A small and low energy consumption equipment will be installed at the spot on the ground corresponding to the center of each virtual cell, which has been given the name of SCU - Sensor and Communication Unit (USC - *Unidades de Sensorização e Comunicações*), starting functioning one hour after sunrise and turning off one hour before sunset, 365 days a year, because high solar irradiances, particularly UV-B, do not occur only in the spring and summer.

The present invention includes a leveled platform for atmospheric and environmental monitoring, which presents the following information and potentialities, these being not restricted to the type of the indicated solar radiation:
- UV-B incidence registration to set up a permanent and real-time map of the ozone layer morphology, thus allowing a cell-to-cell (30 × 30 km) evolution and variation analysis of the release and concentration of the gases that are the cause of the greenhouse effect, and simultaneously the study of the sunlight variation due to the interference of the various types of atmospheric cloudiness;
- aggregation of corrosion in metals, non-metals, alloys and welds, and of molecular fragmentation in paints, varnishes, coatings, fabrics, rubbers, plastics and polymers, since the current UV-B incidences are challenging the solutions found 30 years ago to filter or block these radiations;
- registration of the UV-B incidence to support business decision-making and monitoring, in the areas of forestry and agro-food biotechnologies. Assessment of the sensitivity, growth and quality of forest and agro-food species as a function of the adaptation genetic responses to the current UV-B incidence;
- analysis of the effects and eventual consequences in core ecosystems, due to routines changes in numerous species of birds, cetaceans and bees, among others;
- quantitative and qualitative assessment of honey in the area of beekeeping, as a result of the adoption of new self-preservation routines and adaptation genetic responses;
- permanent and real-time mapping of the morphological variations of the ozone layer over the territory;
- real-time monitoring both in generation and atmospheric dissipation of polluting gases based on the derivation of consolidated redundancies of the relationship between the gas components + density/concentration and the filtering or blocking of UV-B incidences. This application will also create a registration that will configure a historical data series of pollution evolution in this region, whose implementation in the installation is inexpensive and simple; a SCU in the center of the area to be monitored and 4 other SCU within 5 km in the periphery (N-S and E-W) of this area will generate UV-B contents, which due to the proximity between SCU were expected to be the same. This difference will correspond to the level of pollution in that territory;
- monitoring of pollution and cloud interference;
- analysis and quantification of the effects of current UV-B irradiances on the growth and development of forest and agro-food species;
- registration of the UV-B incidence to establish a permanent and real-time map of the ozone layer morphology, also allowing a cell-to-cell (30 × 30 km) evolution and variation analysis of the release and concentration of the gases that are the cause of the greenhouse effect;
- registration of the UV-B incidence as a new decision-support and monitoring tool in the field of forestry and agro-food biotechnologies. Assessment of the quality of agro-food species as a function of the adaptation genetic responses to the current UV-B incidence;
- sensitivity analysis of plant species, including those of food consumption, allowing any agricultural company or entrepreneur to choose the most suitable square cell for the production of the desired species or, on the contrary, which species are most suitable to the terrains he owns, in a certain square cell. Crossing this information with the soil characteristics, altitude and long-term meteorological data, the excellence square cells for the production of certain species will be determined or the species suitable for the production in a certain square cell will be chosen.

In particular, if in a certain sense it is considered that the definitions estimated through the satellite, with reduced territorial detail, configure the estimation of the values of UV-B incidence on the surface, also, in the opposite sense, the surface based UV-B sensorization (ground level) in the reduced square cell of the present invention configures the morphological variations of the ozone layer, in real-time and in a square cell corresponding to that of the territory, thus becoming a permanent mapping and allowing the generation of a territorial registration and the inherent evolution reports, in any defined time intervals. This capability is achieved through the analysis of the data crossing and the comparison between data/satellite (thickening, chemical composition, concentration/density, etc.) and the surface UV-B incidence data in the surface square cell defined by the present invention. In this way, the generation of algorithms with strong premises and reduced levels of error will become an approximation to consolidated redundancies.

The present invention may also be used in pollution monitoring in territorial regions much smaller than those of the square cells, such as cities or industrial areas. In this case, in the opposite sense, it will be the comparison between the UV-B information that will quantify the variations and discontinuities of the pollution, acting as a filter.

Additionally, the present invention may further define the use of SCU - Sensor and Communication Units in ships, whose routes will then be chosen by the convenience of the sensorization to be carried out. During the navigation, and through a predefined and geo-referenced sequence, the SCU archives the data gained by sensorization and automatically send them to a server as soon as it enters a GSM network zone. Knowledge of the atmospheric variations over the oceans is of nuclear importance, both regarding the mapped and evolutional knowledge of the ozone layer and the search for possible solutions that may cause the previous knowledge and mitigate the climatic effects.

Similarly to the above, it is also possible to use the SCU - Sensor and Communication Units in airplanes, whose routes will then be chosen by the convenience of the sensorization to be carried out. During the flights, and through a predefined and geo-referenced sequence, the SCU archives the data gained by sensorization and automatically send them to a server as soon as it enters a GSM network zone. Knowledge of the atmospheric variations at different altitudes is of nuclear importance, both regarding the mapped and evolutional knowledge of the ozone layer and the search for possible solutions that may cause the previous knowledge and mitigate the climatic effects.

### Detailed description of the invention

The present invention is defined as a square mesh system of climate sensorization, real-time communications/ information and archiving of solar radiation incidence data, starting in the UV-B spectrum at ground level, through the generation of square cells of 30 km side / 900 km² area, which are obtained from the projection of a virtual square grid on the GIS (Geographic Information System) platform of the territory, oriented according to the N-S and E-W directions. For example, in the case of Portugal Mainland a grid of 118 square cells will be configured, while a grid of 14 cells will be configured in the case of the Azores (11) and Madeira (7) archipelagos.

Additionally, the present invention comprises a server, Sensor and Communication Units (described below) and mobile devices.

The communication among these various components is carried out as follows; The Sensor and Communication Units measure the desired solar radiation information and send it to the server, which is placed in any fixed location on the ground, wherein this communication can be made wireless or not. The server, upon receiving the information, sends this information to the physical devices which make it available to the users. These devices can be in any number.

At the real location on the ground corresponding to the center of each virtual square cell will be installed a small equipment (for example 0.20 × 0.20 × 0.20 m) and low power consumption, which has been given the name of SCU - Sensor and Communication Units. The SCU start functioning one hour after sunrise and turn off one hour before sunset, 365 days a year, because high solar irradiances, particularly UV-B, do not occur only in the spring and summer.

Alternatively, the SCU can be installed in mobile locations such as motor vehicles, ships, airplanes, etc. In this case the communication takes place only between the SCU and the server, with the information being stored in the server for future analysis and treatment for a variety of purposes.

Each SCU integrates the following components:
- sensor of sunlight incidence, initially in the UV-B spectrum, equipped with cosine response correction that maximizes the independence of the sensor regarding the inclination of solar incidence, thus allowing the measurement of radiations close to the horizon, at the sunrise and sunset. This sensor includes software, responds to a controller and has European certification;
- computer or controller (of operational management) with integrated software, which receives the continuous readings from the sensor of sunlight incidence, initially in the UV-B spectrum, and transfers the contents to a GSM module of data communication simultaneously with alarms and operation reports, in a predefined or remotely controlled sequence. The remote control of all operating configurations is permanent and parameterizable cell-to-cell and at the defined functional or temporal intervals;
- GSM module of data communication which is responsible for communicating the data received from the controller to the server, at defined intervals. In the opposite direction, it receives from the remote control the communications of the operational parameters, which it transmits to the controller;

- photoelectric cell (including software) connected to the computer or controller (of operational management), which detects sudden variations of the sunlight intensity due to the passage of clouds, generating a delay that prevents the communications during the period of reduction and reestablishment of incidence values. This application significantly reduces the operating costs of communication and power consumption;
- backup battery (lithium-ion) with controller and alarm, with capacity for five days of autonomous operation of the equipment in case of malfunction or power failure. It sends alarms and operation reports to the server through the GSM communication module.

As mentioned, this equipment will be installed in the locations corresponding to the center of each virtual square cell, or as close as possible, for example in public buildings such as City Halls, Parish Councils or in Volunteer Fire Stations. As a counterpart to these partnerships to be formalized, an access/user code will be assigned to the platform of the present invention, for example via the web.

Although remotely programmable, in routine mode the SCU reports only when the incidence value changes (except in the period of cloud interference). To make this possible, and only in case the SCU are installed at a fixed location, that is, on the ground location that corresponds to the virtual center of the square cell, there are physical devices of public information available in the ground, in the area of terrain that corresponds to each virtual square cell, which receive and display the same value of UV-B incidence (initially), both in urban and non-urban areas.

All the physical devices for public information of the UV-B incidence contain in its interior a DRU - Data Reception Unit (URD - *Unidade de Recepção Dados*), consisting of a GSM communication board connected to a controller that commands the electromechanical or electronic two-digit (from 1 to 11, which is the maximum value of the UV-B incidence) information/display panel. Simultaneously, and regarding the physical devices, this controller (plus software) will receive information from the European Blue Flag Association (ABAE), through GSM/Data, regarding the water and sand quality of the beach, which will be displayed in two luminous screens built-in in said physical devices. The energy supply will be guaranteed by solar panels integrated in the public information placards.

There is no limit to the number of DRU to be installed in the territorial region corresponding to each virtual square cell. Like the SCU, the DRU will also be equipped with a backup battery (lithium-ion), in order to support the operation of the electronic components for a period of 5 days, in case of power failure of solar panel or persistent cloudiness.

It should be noted that it is necessary to install these physical devices, hereinafter referred to as static information placards.

These placards are static and have electronic components for communication, management and energy supply (DRU - Data Reception and Management Unit), are supported by a ground fixing structure, include a solar panel and an electromechanical light panel which provides the information received by the server or by led, and have in its interior a stainless steel reinforcement structure, all the electronic components of management, communications and energy supply and a backup battery. It may have an impact sensor to detect vandalism or theft. The ground fixing structure is preferably a steel tube, in which the components are internally installed soaked in neutral pH oil so that, if installed near the coast, they are not destroyed by saltpeter and water.

These placards include information spaces of the Instituto de Socorros a Naufragos (ISN) and ABAE and include electronic/luminous information, such as the quality of water for bath and of the sand, which is remotely operated by ABAE according to biweekly analyzes, or even electronic information of the tides.

As a preferred embodiment of the physical devices, they may be four meter high × 1 meter wide placard with the shape of longboard surfboards made in fiberglass.

## Claims

1. Remote system for climate sensorization, real-time monitoring, communication and archiving of solar radiations, comprising:
a) at least one server;
b) a Geographic Information System platform, that includes a projection grid of the territory, in which each square cell has 30 km side / 900 km**²**, oriented according to N-S and E-W directions;
c) at least a sensor and communication unit per cell, consisting of:
i. a sensor of sunlight incidence, equipped with cosine response correction, generating continuous readings of sunlight incidence;
ii. a computer or controller with integrated software receiving the readings of sunlight incidence;
iii. a GSM module for data communication, receiving the readings of sunlight incidence from the computer or controller and communicating them to the server;
iv. a photoelectric cell connected to the computer or controller and generating a delay that prevents communication during periods of reduction and reestablishment of incidence values; and
v. a battery with controller and alarm;
d) at least a physical information device for receiving and displaying the readings of sunlight incidence integrating a GSM communication board connectable to a controller that commands an electromechanical or electronic two-digit information/display panel which provides the information received by the server, a battery and a solar panel for energy supply.

2. System according to claim 1, **characterized in that** the physical information device has an impact sensor.

3. System according to claim 1, **characterized in that** the physical information device has a steel ground fixing structure.

4. System according to claim 1, **characterized in that** the ground fixing structure is a steel tube with neutral pH oil inside.

5. System according to claim 1, **characterized in that** the physical information device is longboard fiberglass surfboards, with four-meter-high and one meter wide.

6. System according to claim 1, **characterized in that** the batteries of the sensor and communication units and physical information devices are lithium-ion batteries.

## Patentansprüche

1. Fernsystem für Klimaerkennung, Echtzeitüberwachung, Kommunikation und Archivierung von Sonnenstrahlung, welches folgendes umfasst:
a) mindestens einen Server;
b) eine geographische Informationssystemplattform, welche einen Projektionsgitter des Gebiets umfasst, in welchem jede quadratische Zelle einen 30 Km langen Rand / 900 Km**²** hat, ausgerichtet nach N-S und O-W Richtungen;
c) mindestens eine Sensor- und Kommunkationseinheit per Zelle, bestehend aus:
i. einem Sensor aus Sonnenlichteinfall, ausgestattet mit Cosinus-Response Korrektur, welche kontinuierliche Messungen von Sonnenlichteinfall erzeugen;
ii. einem Computer oder Steuerung mit intergrierter Software, welche die Messungen von Sonnenlichteinfall aufnimmt;
iii. einem GSM-Modul für Datenkommunikation, welche die Messungen von Sonnenlichteinfall vom Computer oder der Steuerung aufnimmt und diese an den Server übermittelt;
iv. einer photoelektrischen Zelle, die an den Computer oder an die Steuerung verbunden ist und eine Verzögerung verursacht, die Kommunikation während Zeiträumen von Verringerungen und Wiederherstellung von Einfallwerten verhindert; und
v. einer Batterie mit Steuerung und Alarm;
d) mindestens ein physikalisches Informationsgerät, um die Messungen von Sonnenlichteinfall zu empfangen und anzuzeigen, mit einer GSM Kommunikationstafel, die an eine Steuerung anschließbar ist, die eine elektromechanische oder elektronische zweistellige Informationsanzeigetafel steuert, welche die Information, die von dem Server empfangen wird, zur Verfügung gestellt wird, eine Batterie und eine Solarzelle für Energieversorgung.

2. System nach Anspruch 1, **dadurch gekennzeichnet, dass** das physikalische Informationsgerät einen Aufprallsensor hat.

3. System nach Anspruch 1, **dadurch gekennzeichnet, dass** das physikalische Informationsgerät eine Bodenstruktur aus Stahl hat.

4. System nach Anspruch 1, **dadurch gekennzeichnet, dass** die Bodenstruktur aus Stahl ein Stahlrohr mit neutralem PH Öl im Inneren ist.

5. System nach Anspruch 1, **dadurch gekennzeichnet, dass** das physikalische Informationsgerät ein Longboard Glasfasersurfbrett ist, mit vier Metern Höhe und einen Meter breit.

6. System nach Anspruch 1, **dadurch gekennzeichnet, dass** die Batterien der Sensor- und Kommunkationseinheiten und physikalischem Informationsgerät Lithium-ionen-Batterien sind.

## Revendications

1. Système à distance pour détection climatique, surveillance en temps réel, communication et archivage de radiations solaires, comprenant:
a) au moins un serveur;
b) une plateforme de Système d'Information Géographique, qui comprend une grille de projection du territoire, dans laquelle chaque cellule carrée a 30 km de côté / 900 km**²**, orientée selon les directions N-S et E-W;
c) au moins une unité de détection et communication par cellule, composé de:
i. un capteur d'incidence de la lumière solaire, équipé d'une correction de réponse du cosinus, générant des lectures continues de l'incidence de la lumière solaire;
ii. un ordinateur ou un contrôleur avec logiciel intégré recevant les lectures d'incidence de la lumière solaire;
iii. un module GSM pour la communication de données, recevant les lectures d'incidence de la lumière solaire depuis l'ordinateur ou le contrôleur et les communiquant au serveur;
iv. une cellule potoélectrique connectée à l'ordinateur ou au contrôleur et générant un délai empêchant la communication pendant les périodes de réduction et de réétablissement des valeurs d'incidence; et
v. une batterie avec contrôleur et alarme;
d) au moins un dispositif d'information physique pour recueillir et afficher les lectures d'incidence de la lumière solaire, intégrand une carte de communication GSM connectable à un contrôleur qui commande un panneau d'information/d'affichage électromécanique ou électronique à deux chiffres qui fournit les informations reçues par le serveur, une batterie et un panneau solaire pour l'approvisionnement en énergie.

2. Système selon la revendication 1, **caractérisé en ce que** le dispositif d'information physique a un capteur de choc.

3. Système selon la revendication 1, **caractérisé en ce que** le dispositif d'information physique a une structure de fixation au sol en acier.

4. Système selon la revendication 1, **caractérisé en ce que** la structure de fixation au sol est un tube en acier avec huile de pH neutre à l'intérieur.

5. Système selon la revendication 1, **caractérisé en ce que** le dispositif d'information physique est une planche de surf longboard en fibre de verre, avec une hauteur de quatre mètres et un mètre large.

6. Système selon la revendication 1, **caractérisé en ce que** les batteries du capteur et des unités de communication et du dispositif d'information physique sont des batteries au lithium-ion.
